Europäisches Patentamt

**European Patent Office**

Office européen des brevets

(19)

(11) Publication number: **0 198 640**
A2

(12) **EUROPEAN PATENT APPLICATION**

(21) Application number: **86302528.4**

(22) Date of filing: **04.04.86**

(51) Int. Cl.⁴: **B 29 C 43/34**

(30) Priority: **15.04.85 US 723143**
**26.02.86 US 833812**

(43) Date of publication of application: **22.10.86**
**Bulletin 86/43**

(84) Designated Contracting States: **AT BE DE FR GB IT LU NL SE**

(71) Applicant: **NRM CORPORATION, 400 W. Railroad Street, Columbiana Ohio 44408 (US)**

(72) Inventor: **Crumbacher, Thomas A., 249 Bell Avenue, Columbiana Ohio (US)**
Inventor: **Naylor, Gary A., 343 Carriage Lane, Canfield Ohio (US)**
Inventor: **Singh, Anand Pal, 2343 Oak Trace Drive, Yougstown Ohio (US)**

(74) Representative: **Rooney, Paul Blaise et al, D.Young & Co. 10 Staple Inn, London WC1V 7RD (GB)**

(54) **Tire loader and basket.**

(57) A loader for a tire curing press includes a support (28), a loader frame (20) mounted on the support for vertical and horizontal movement, a loader basket (18) mounted on the loader frame for engaging, holding and releasing a tire, a first actuator (48) for vertically moving the loader frame, a second actuator (44) for horizontally moving the loader frame into and out of the press when open, and a mechanical guide (86) for guiding the loader frame from an over-center position in the press to a center position as the loader frame is moven vertically in the press. The loader frame is supported on a spline shaft (28) for movement therealong and rotation therewith by ball bushings (32) riding in the grooves of the spline shaft. The loader basket comprising a plurality of generally radially movable shoes (116, 182), an adjustable stop (146, 198) for limiting radial movement of each shoe and two forms of an adjustment mechanism for simultaneously and uniformly adjusting the adjustable stops. One form of adjustment uses a knob (164) and flexible shafts (156, 158), while the other uses a crank (212) and rigid shafts (207) connected to the stops universal joints (208).

-1-

**Title:**       "Tire Loader and Basket"

## DISCLOSURE

This application is a continuation-in-part of co-pending application Serial No. 723,143, filed April 15, 1985.

The invention herein disclosed relates generally to a tire loader and basket and more particularly to a tire loader and basket for use with tire machinery such as tire curing presses.

## BACKGROUND

Tire loaders have been widely employed in connection with automated tire machinery such as tire curing presses. Over the years such tire loaders have had a variety of different structural features depending upon the operational parameters involved such as the type of press and the type of tire being loaded. Since the advent of radial tires an important concern has been the need for the tire loader to locate very accurately the tire at the center of the press. Many prior art tire loaders simply could not attain the desired degree of precision and/or required difficult and time consuming adjustments.

Some prior art tire loaders have employed a horizontally swinging loader arm on which a loader basket or chuck was carried for horizontal movement into and out of the press. Loader baskets or chucks have included a circumferential arrangement of radially movable shoes which were expanded to engage and hold the upper bead of the tire. Loader arms also have been movable vertically to pick up a tire held by the loader basket from say a loader stand or conveyor in front of the press and later to lower the tire in the press. For precision centering, not only must the loader shoes be concentric with the center axis of the loader basket but such center axis must be accurately located at the center of the mold cavity by the loader arm. This is generally true for other types of tire loaders as well.

One problem associated with known tire loaders has been the inability or difficulty in maintaining concentricity of the loader shoes with the center axis of the loader basket over the entire range of bead size adjustment. It is noted that most loaders are designed to service a number

-2-

of different tire bead sizes.  Another problem has been difficulty in obtaining and maintaining accurate alignment of the center axis of the loader basket with the center of the mold cavity particularly during vertical movement of the loader basket in the press as may be needed for controlled transfer of the tire to the press.

## SUMMARY OF THE INVENTION

The present invention provides a tire loader and basket for accurately loading tires into tire machinery and especially a tire curing press.  The invention also provides for easy and quick adjustment of the loader basket for use with tires of different bead sizes while maintaining the concentricity of the loader shoes over the entire range of bead size adjustment.

According to one aspect of the invention, a loader for a tire curing press comprises a support, a loader frame mounted to the support for vertical and horizontal movement, a loader basket mounted to the loader frame for engaging, holding and releasing a tire, a first actuator for vertically moving the loader frame, a second actuator for horizontally moving the loader frame into and out of the press when open, and a mechanical guide for guiding the loader frame from an over-center position in the press to a center position as the loader frame is moved vertically in the press.  More particularly, the mechanical guide includes on opposite ones of the loader frame and support a vertical guide track and track follower which are maintained in engagement by the second actuator as the loader frame is moved vertically in the press by the first actuator.  The vertical track has a taper at one end for guiding the loader frame from such over-center position to a center position and a vertical guide surface for maintaining the loader frame at such center position during vertical travel in the press.

According to another aspect of the invention, a tire loader comprises a support, a spline shaft journaled to the support and a loader frame supported on the spline shaft for movement therealong by ball bushings riding in the grooves of the spline shaft.  The ball bushings are keyed to the loader frame and a rotary actuator is provided to rotate the spline shaft about its axis for swinging the loader frame between tire pick-up and load positions.

According to still another aspect of the invention, a loader basket comprises a plurality of generally radially movable shoes, an adjustable stop for each shoe and an adjustment mechanism for simultaneously adjusting the adjustable stops. More particularly, worm gear jacks are used as adjustable stops for the radially movable shoes and the worm gear jacks are serially connected by rods or flexible cables for single point and uniform adjustment of the worm gear jacks.

To the accomplishment of the foregoing and related ends, the invention, then, comprises the features hereinafter fully described and particularly pointed out in the claims, the following description and the annexed drawings setting forth in detail a certain illustrative embodiment of the invention, this being indicative, however, of but one of the various ways in which the principles of the invention may be employed.

## BRIEF DESCRIPTION OF THE DRAWINGS

In the annexed drawings:

Fig. 1 is a fragmentary horizontal section through a tire loader assembly according to the invention;

Fig. 2 is an enlarged fragmentary vertical section, partly broken away, of the loader assembly taken substantially along the line 2-2 of Fig. 1;

Fig. 3 is an enlarged fragmentary elevational view of the loader assembly looking generally in the direction of the arrows 3-3 of Fig. 1;

Fig. 4 is a bottom plan view of a loader basket assembly according to the invention;

Fig. 5 is a slightly enlarged fragmentary vertical section through the loader basket assembly taken substantially along the line 5-5 of Fig. 4;

Fig. 6 is a bottom plan view of another loader basket assembly according to the invention;

Fig. 7 is an enlarged horizontal section through the loader basket assembly of Fig. 6 taken substantially along the line 7-7 of Fig. 6; and

Fig. 8 is an enlarged fragmentary elevational view of a portion of the loader basket assembly looking generally in the direction of the arrows 8-8 of Fig. 6.

-4-

## DETAILED DESCRIPTION

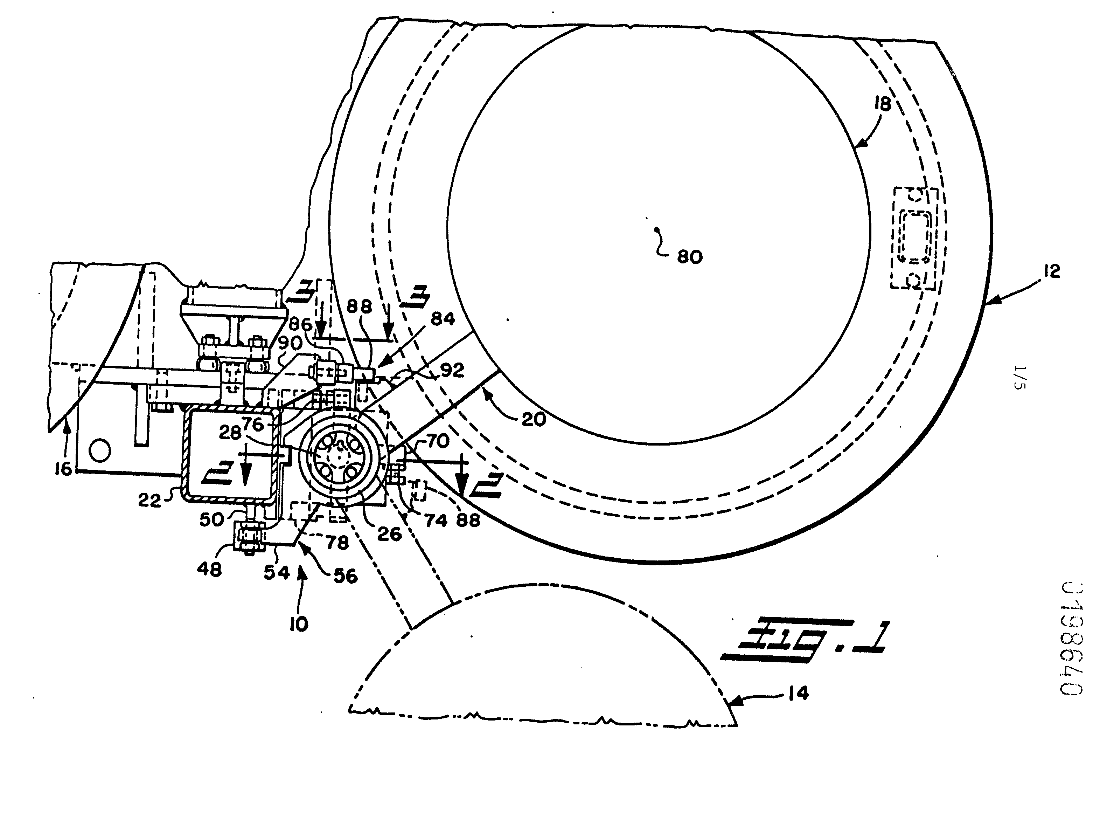

In Fig. 1 a tire loader assembly according to the invention is designated generally by reference numeral 10. The loader assembly 10 is particularly suited for loading a green tire into a mold cavity 12 of a tire curing press from a pick-up position 14 in front of the press. The press may be of a dual cavity type and usually a second similar loader assembly will be provided to load green tires into the other mold cavity partly shown at 16. The second loader assembly is not shown but essentially would be a mirror image of the loader assembly 10.

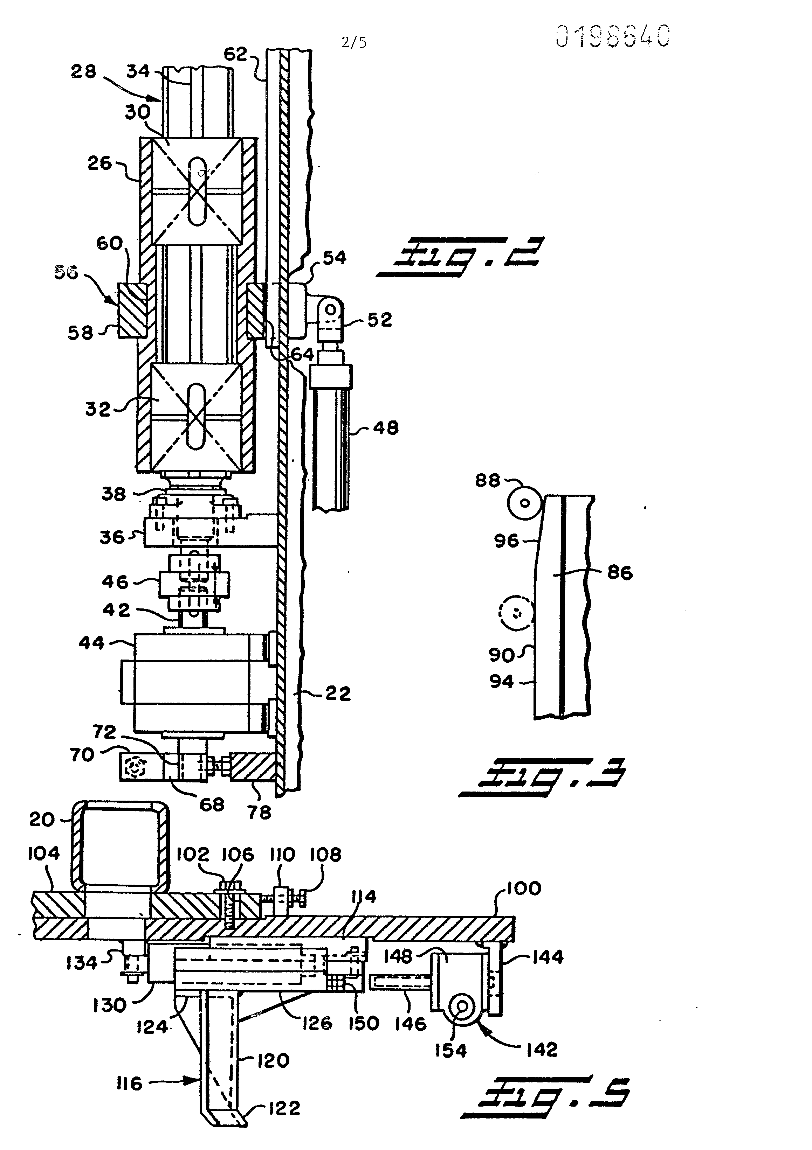

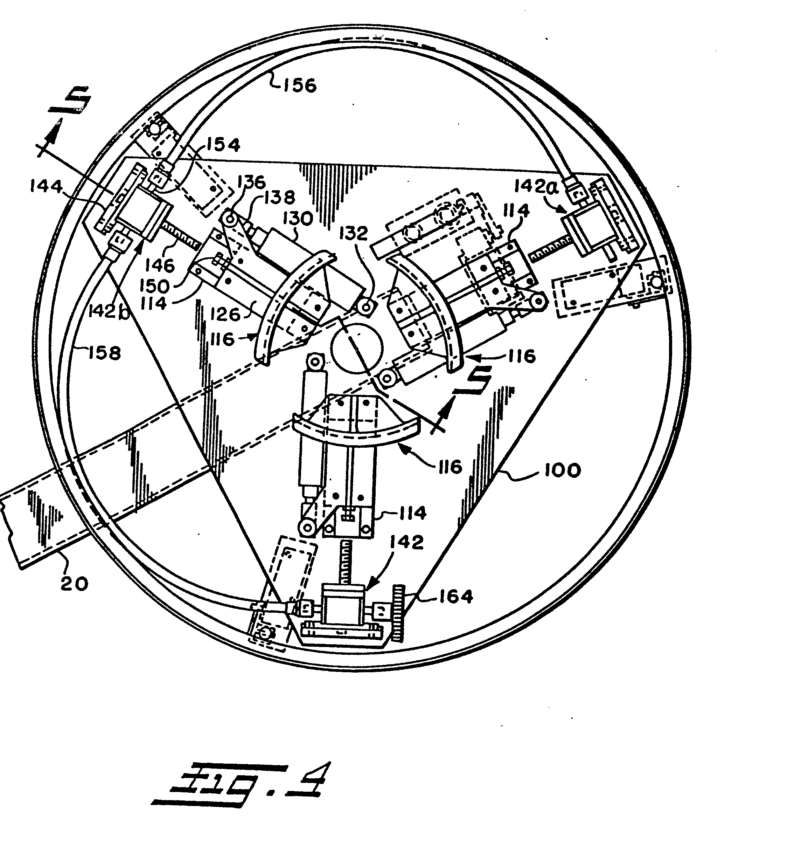

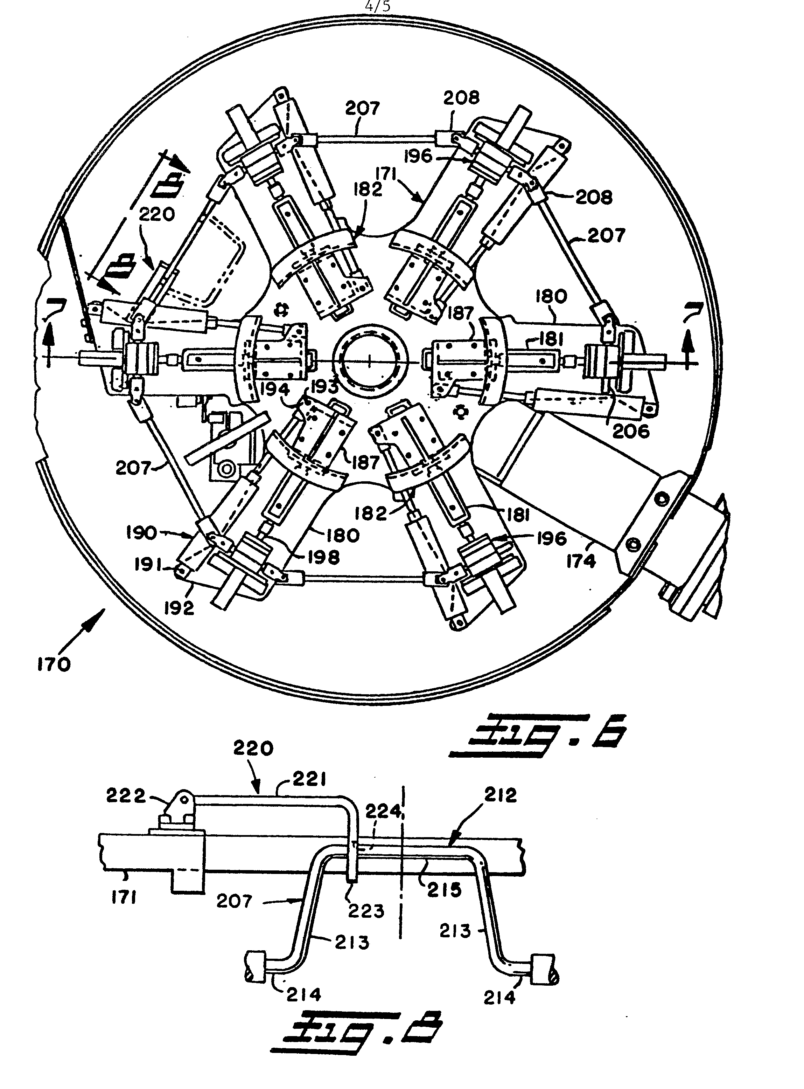

The loader assembly 10 may be of the swing-arm type and, as shown, includes a loader basket assembly 18 (Figs. 3 and 4) which depends from the distal end of a loader arm or frame 20. The loader arm 20 is mounted on an upright loader stanchion or column 22 for vertical and horizontal swinging movement as more fully described below. For a dual cavity press the loader stanchion 22 preferably is located centrally between but towards the front of the mold cavities 12 and 16 as shown. Accordingly, the loader assemblies for both mold cavities of the press can share a single common loader stanchion to which the loader arms of such assemblies may be mounted generally at respective sides of the loader stanchion in the manner illustrated and hereinafter described.

With additional reference to Fig. 2, the loader arm 20 is supported in cantilever-like fashion from a vertically extending tube 26. The tube 26, preferably cylindrical, is mounted for vertical movement on a vertical spline shaft 28 by vertically spaced top and bottom ball bushings 30 and 32. The races of the top and bottom ball bushings are fixed in corresponding ends of the tube, and the balls of each bushing ride in respective vertical grooves formed between the splines 34 of the shaft 28. Accordingly the tube is keyed against rotation relative to the shaft but movable along the vertical axis of the shaft.

The spline shaft 28 is journaled top and bottom between brackets on the loader stanchion 22. As seen in Fig. 2, the bottom bracket 36 has mounted thereto a bearing 38 in which the lower end of the shaft 28 can turn. A similar journal mount may be provided at the upper end of the spline shaft.

The lower end of the spline shaft 28 projects beneath the bottom bracket 36 and is coupled to the shaft 42 of a rotary actuator 44 by a keyed coupling 46. Accordingly, operation of the rotary actuator 44 will turn the spline shaft about its axis which in turn will correspondingly swing the loader arm 20 horizontally.

Vertical movement of the loader arm 20 is effected by a vertical piston-cylinder assembly 48 which has its blind end pivotally connected to a bracket 50 on the loader stanchion 22. The rod end of the piston-cylinder assembly 48 is connected by a clevis 52 to a connecting arm 54 of a yoke 56. The yoke 56 at its collar portion 58 is axially retained in a groove 60 at the outer diameter of the loader arm tube 26 which can turn in the yoke. To prevent side load on the piston-cylinder assembly 48, rotation of the yoke is precluded by a key 62 on the loader stanchion 22 which engages a key slot 64 in the yoke. The key 62 is vertically elongated to prevent rotation of the yoke over its range of vertical movement effected by extension and retraction of the piston-cylinder assembly 48. Although not shown, limit switches and/or stops may be provided to indicate or determine raised and lowered positions of the loader arm.

Respecting control of the extent of horizontal swinging movement of the loader arm 20 into and out of the mold cavity 12 and according to the illustrated preferred embodiment of the invention, the shaft 42 of the rotary actuator 44 is double-extended to provide for connection of a control collar 68 to the lower extended end of the actuator shaft 42. The control collar 68 has a pair of angularly offset arms 70 and 72 extending horizontally therefrom and each arm 70, 72 is provided with a respective adjustable stop 74, 76. Outward swinging movement of the loader arm relative to the mold cavity 12 is limited by engagement of the adjustable stop 74 against a stop plate 78 on the loader stanchion 22. The stop 74 may be adjusted properly to locate the loader basket 18 at its tire pick-up position 14 in front of the press. For example, a loader stand for green tires may be provided in front of the press and the stop 74 adjusted to assure that the axial centerline 80 of the loader basket 18 is within a close tolerance of the axial centerline of the loader stand.

When the loader arm 20 is swung into the mold cavity 12, such inward swinging movement is limited by engagement of the other adjustable stop 76 against the stop plate 78. According to the preferred embodiment of the invention, the adjustable stop 76 is adjusted to determine an over-center position of the loader arm and, more particularly, the loader basket 18 in relation to the axial centerline of the mold cavity 12. That is, the adjustable stop 76 is set so that the axial centerline 80 of the loader basket will pass through and beyond the axial centerline of the mold cavity as the loader basket is swung horizontally into the press.

From the over-center position determined by engagement of the adjustable stop 76 with the stop plate 78, final and precise centering of the loader basket 18 to the mold cavity 12 is effected by a mechanical guide 84 during vertical lowering of the loader basket in the press. The mechanical guide 84 includes a vertical guide track 86 and a track follower consisting of a roller 88. The guide track 86 is secured to a bracket 90 on the loader stanchion 22. On the other hand, the roller 88 is rotatably mounted on a stub shaft fixed to a bracket 92 on the loader arm 20. The roller 88 is radially positioned in relation to the swing axis 94 of the loader arm such that it will engage a vertically extending guide surface 90 (Fig. 3) of the guide track.

As seen in Fig. 3, the guide surface 90 has a lower straight portion 94 and a relatively shorter upper portion 96 that is tapered or inclined to the lower portion 94. The guide track is fixed to the loader stanchion 22 such that the lower straight portion 94 of the guide surface 90 is exactly parallel to the axial centerline of the mold cavity 12. As is preferred, the included angle formed between the vertical plane of the lower guide surface portion 94 and a vertical plane common to the loader arm swing axis 94 and the axial centerline of the mold cavity 12 is exactly equal the included angle formed between a vertical plane through the axis of the roller 88 and a vertical plane common to the loader arm swing axis 94 and the axial centerline of the loader basket 18. Also, the axial centerlines of the mold cavity 12 and loader basket 18 are equidistant from the swing axis 94 of the loader arm in the illustrated preferred embodiment.

Respecting preferred operation of the loader assembly as thus far described, initially the loader arm 20 will be swung outwardly to locate the loader basket 18 at its pick-up position 14 above a green tire positioned, for example, on a loader stand in front of the press. The actuator 48 may then be operated to lower the loader arm for pick-up of the green tire by the loader basket. With the green tire held by the loader basket, the loader arm is raised to an elevated position and then the rotary actuator 44 is operated to swing the loader arm horizontally into the then open mold cavity 12 as between vertically separated top and bottom mold sections. As the loader arm is swung into the press, it will pass through and beyond a center position to an over-center or beyond center position determined by engagement of the adjustable stop 76 with the stop plate 78. At such elevated and over-center position of the loader arm, the roller 88 of the mechanical guide 84 will be located such that the upper portion 96 of the guide surface 90 of the guide track 86 extends beneath the roller as seen in solid lines in Fig. 3. Also, the roller preferably has not yet engaged the guide track 86 so that inward swinging movement of the loader arm is halted by the adjustable stop 76 and not the guide track.

The actuator 48 may now be retracted to lower the loader arm 20 in the press and hence the loader basket 18 for controlled transfer of the tire to the press. For example, the loader basket may be thusly lowered to place the bottom bead of the therein held green tire on the toe ring of the bottom mold section.

During such lowering of the loader arm 20, the roller 88 will engage and ride on the guide surface 90 of the guide track 86. Initially the roller will ride on the tapered or inclined upper portion 96 of the guide surface 90 which causes the loader arm to be urged from its over-center position towards its center position in the press. As the roller passes onto the lower portion 94 of the guide surface, the loader arm will then thusly be located and maintained at its center position during further downtravel of the loader arm. During such lowering of the loader arm, the rotary actuator 44 remains operative to keep the roller in positive contact with the guide track. The guide track is precisely set such that with the roller engaged

-8-

against the lower portion 94 of the guide surface, the axial centerline of the loader basket 18 will be precisely aligned with the axial centerline of the mold cavity 12.

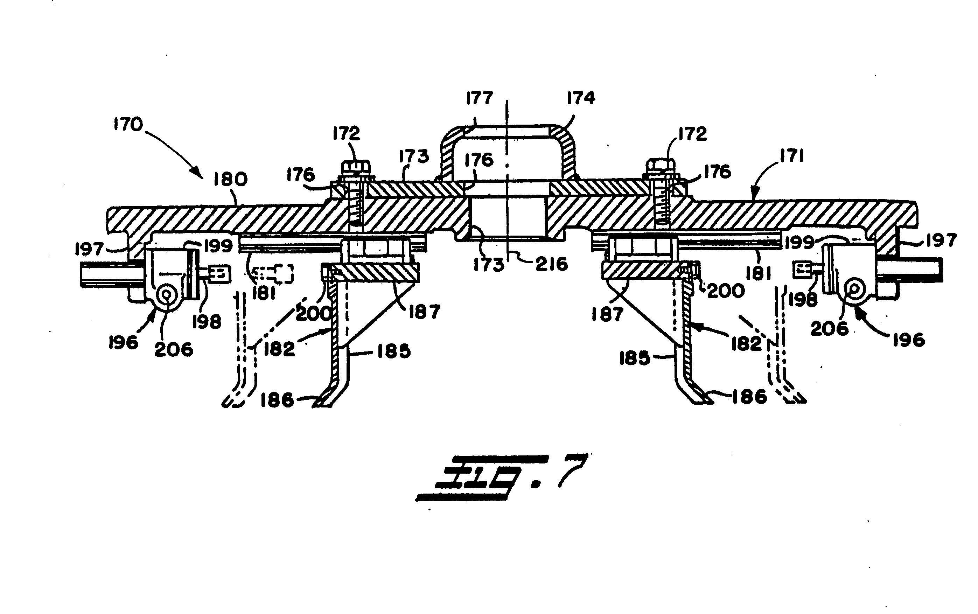

In the foregoing manner, the mechanical guide 84 effects and maintains accurate alignment of the axial centerline of the loader basket 18 with the axial centerline of the mold cavity 12. Of course, precise centering of the green tire held by the loader basket to the mold cavity further requires the tire to be held concentric with the axial centerline of the loader basket. Respecting this latter requirement, Figs. 4 and 5 show a preferred embodiment of a loader basket which provides for easy and quick adjustment for use with tires of different bead sizes while maintaining the concentricity of the loader shoes over the entire range of bead size adjustment.

As seen in Figs. 4 and 5, the loader basket 18 includes a loader basket plate 100 mounted by fasteners 102 to the underside of a loader frame plate 104 at the distal end of the loader arm 20. The loader frame plate 104 is secured as by welding to the underside of the loader arm 20 and includes oversized bores 106 through which the fasteners 102 extend. Such oversized bores 106 permit adjustment of the centerline of the loader basket plate relative to the loader arm by jackscrews 108. The jackscrews 108 are threaded in blocks 110 at the top side of the loader basket plate and project inwardly therefrom to engage respective side edges of the mounting plate 104. Three such jackscrews may be provided in a triangular arrangement to provide for centerline adjustment of the loader basket plate. Once adjusted, the fasteners 102 may be tightened to hold securely the loader basket plate to the loader arm. As seen in Fig. 4, the loader basket plate and loader frame plate have centerbores coaxially aligned with an opening through the loader arm which may accommodate the center post of a press center mechanism when the loader basket is lowered in the press as aforedescribed.

The loader basket plate 100 may have the illustrated triangular shape with each corner of the triangle truncated as shown. Secured to the underside of the loader basket plate are three radially extending ball slides 114 which are circumferentially equally spaced apart at positions substantially in line with respective corners of the triangular basket plate. Associated with each ball slide 114 is a loader shoe 116, each of which is identical in form.

Each loader shoe 116 includes a vertically extending spine plate 120 which is slightly curved as seen in Fig. 4. Along its bottom edge, the spine plate 120 is bent outwardly slightly to form a lip 122 adapted to engage the upper bead of a tire. The curvature of the spine plate is determined by the range of tire sizes which may be accommodated by the loader basket. The top of the spine plate is secured at inwardly bent flanges 124 to the underside of a shoe carriage 126 restrained for radial movement in the ball slide 114. The ball slides preferably are of the type having a pre-loading feature which can be tightened in the event of looseness in the shoe sliding motion.

Each shoe 116 is radially inwardly and outwardly movable by a respective piston–cylinder assembly 130 preferably of pneumatic type. Each piston–cylinder assembly 130 has its blind end connected at a respective pivot 132 to a respective connecting block 134 on the bottom side of the loader basket plate and its rod end pivotally connected at a respective pivot 136 to an arm 138 extending from the respective shoe carriage 126. Accordingly, retraction of the piston–cylinder assemblies 130 will radially retract the loader shoes while conversely, extension of the piston–cylinder assemblies will radially expand the loader shoes.

The outward travel of each loader shoe 116 is precisely limited by a respective worm gear jack 142. Each worm gear jack is mounted to a vertical plate 144 depending from the loader basket plate 100 at a respective truncated corner of the loader basket plate. The spindle 146 of the jack projects inwardly from the jack housing 148 in a radial direction aligned with an adjustment screw 150 threaded in the respective shoe carriage. When the piston–cylinder assembly 130 is extended, it is the adjustment screw 150 which engages the end of the jack spindle 146 to limit outward travel of the loader shoe. The loader shoes can be adjusted with respect to their corresponding worm gear jacks with the respective adjustment screws 150 so that the loader shoes will be concentric with the axial centerline of the loader basket plate when radially expanded against their respective worm gear jacks.

The double extended drive shafts 154 of the worm gear jacks 142 are serially connected by flexible cables 156 and 158 for single point and uniform adjustment of the worm gear jacks. As seen in Fig. 3, the flexible cable 156 couples the drive shaft of worm gear jack 142a to the drive shaft of worm gear jack 142b. The flexible cable 158 in turn couples the worm gear jack 142b to the worm jack 142c. Accordingly, rotation of the drive shaft of the worm gear jack 142c will effect simultaneous and uniform adjustment of the other two worm gear jacks 142b and 142a. In this manner, the loader basket may be easily and quickly adjusted for use with tires of different bead sizes while maintaining the concentricity of the loader shoes over the entire range of bead size adjustment. This is a marked improvement over prior loader basket designs which required numerous adjustments to be made and concentricity to be re-established for each tire bead size change.

The aforedescribed adjustment mechanism also lends itself to manual adjustment without the need for tools. To this end, a knob 164 is connected to the free end of the drive shaft of the worm gear jack 142c. Accordingly, the press attendant need only turn the knob by hand to adjust the loader basket to a different bead size. No longer must he waste time in finding a needed tool or tools to make required adjustments in the loader basket when the tires to be loaded have a different bead size than those previously loaded by the loader assembly.

In view of the foregoing, the loader shoes 116 may be individually adjusted for concentricity with the axial centerline of the loader basket plate 100 and the axial centerline of the loader basket plate may be adjusted with respect to the loader frame 20. These adjustments, however, need only be done once notwithstanding use of the loader basket with tires of different bead sizes. For bead size change, only single point adjustment is needed and such may be accomplished without the use of tools while the concentricity of the loader shoes (i.e., concentricity when the loader shoes are expanded) is maintained over the entire range of bead size adjustment. Also, the

0198640

-11-

loader assembly provides for accurate alignment of the axial centerline of the loader basket with the axial centerline of the mold cavity with the result being very accurate locating of the tire at the center of the press without requiring difficult and time consuming adjustments.

Referring now to Figs. 6-8, another loader basket according to the invention is indicated generally at 170. The loader basket 170 includes a loader basket plate 171 mounted by fasteners 172 to the underside of a loader frame plate 173. The loader frame plate is secured as by welding to the underside of loader arm 174 at its distal end for swinging of the loader basket into and out of a tire press as in the aforedescribed manner. As will be appreciated, the loader basket 170 as well as the loader basket 18 may be used in other types of loader assemblies than that shown in Figs. 1-3 including loader assemblies and tire transfer devices other than the swing-arm type.

The loader frame plate 173 includes oversized bores 176 through which the fasteners 172 pass. Such oversized bores permit adjustment of the centerline of the loader basket plate 171 relative to the loader arm. Also, the loader basket plate and loader frame plate have center bores 175 and 176 coaxially aligned with an opening 177 through the loader arm 174 which may accommodate the center post of a press center mechanism when the loader basket is lowered in the press.

The loader basket plate 171 may have the illustrated spider or asterisk shape as is desired for purposes of reducing the overall weight of the loader basket. Secured to the underside of the loader basket plate generally in line with respective radial arms 180 thereof are respective radially extending ball slides 181. In the illustrated embodiment particularly suited for loading truck tires, there are six circumferentially equally spaced apart ball slides. Associated with each ball slide is a loader shoe 182, each of which is identical in form.

Each loader shoe 182 includes a vertically extending spine plate 185 which is slightly curved as seen in Fig. 6. The lower end portion of each spine plate is bent outwardly to form a lip 186 for engaging the upper bead of a tire. The top of the spine plate is secured as by welding to the

-12-

underside of a shoe carriage 187 mounted to the loader basket plate 171 by the ball slide 181 for radial movement.

Each shoe 182 is radially and outwardly movable by a respective piston–cylinder assembly 190 preferably of pneumatic type. Each piston–cylinder assembly has its blind end pivotally connected at a respective pivot 191 to a connecting arm 192 at the distal end of the respective radial arm 180 and its rod end pivotally connected at a respective pivot 193 to connecting arm 194 extending from the respective shoe carriage 187. Accordingly, extension of the piston–cylinder assemblies will radially retract the loader shoes while, conversely, retraction of the piston–cylinder assemblies will radially expand the loader shoes.

Outward travel of each loader shoe 182 is precisely limited by a respective worm gear jack 196. Each worm gear jack is mounted to an attachment leg 197 depending from the respective radial arm 180 at the distal end thereof. The spindle 198 of the jack projects inwardly from the jack housing 199 in a radial direction aligned with a button stop 200 secured to the respective shoe carriage 187. When the piston–cylinder assembly 190 is retracted, the button stop engages the end of the jack spindle to limit outward travel of the loader shoe.

Double extended drive or input shafts 206 of the worm gear jacks 196 are serially connected by rods 207 for single point and uniform adjustment of the worm gear jacks 196. Each rod 207 is connected at its ends by universal joints 208 to the drive shafts of a respective pair of relatively adjacent worm gear jacks. As seen in Fig. 6, only five connecting rods are needed serially to connect the drive shafts of six worm gear jacks.

With additional reference to Fig. 8, it can be seen that one of the connecting rods 207 is bent intermediate its ends to form a crank 212 of generally U–shape. The legs 213 of the U extend laterally from the rod ends 214 to the base 215 of the U which functions as a handle. The handle 215 may be grasped by an operator and turned around the axis of the rod ends 214 connected to the drive shafts 206 of adjacent worm gear jacks 196 to obtain simultaneous and uniform adjustment of the serially connected worm gear jacks. In this manner, the loader basket may be easily and quickly adjusted for use with tires of different bead sizes. Moreover, once concentricity of the loader shoes 182 has been established with the center axis 216 of the loader basket, such concentricity will be maintained over the entire range of bead size adjustment. Also, such adjustment mechanism provides for manual single point adjustment of the loader basket without the use of tools.

After the loader basket 170 has been thusly adjusted for a desired bead size, the crank 212 may be locked in position by a locking device 220, and preferably in an out-of-the-way up position. The locking device includes a latching arm 221 pivotally attached at one end to brackets 222 secured atop the loader basket plate 171. At its free end, the latching arm is bent downwardly to form a catch 223 having a downwardly opening slot 224 for receiving the handle 215 of the crank. The latching arm may be swung upwardly to release the crank thereby permitting adjustment of the loader basket and then downwardly to hold the crank in a locked position. As will be appreciated, the latching arm by its own weight will hold the catch in engagement with the crank.

As is preferred, the worm gear jacks 196 are of such type that provide for fine adjustment. By way of particular example, each jack may be of the type including an input worm in mesh with a gear having a threaded center bore which in turn is in mesh with a threaded portion of the spindle 198 of the jack. The worm to gear ratio may be 40:1 while the jack spindle may have ten threads per inch to provide for 1/400 inch advance of the spindle per revolution of the worm to which the connecting rods 207 are connected. This provides for fine adjustment of the loader basket to a desired tire size. The resultant high mechanical advantage of the worm gear jacks also is particularly advantageous if a motor, such as an air motor, is used to drive the worm gear jacks in place of the crank. An air motor may be coupled, for example, to one of the worm gear jacks that has only one rod connected thereto and therefore has one end of its drive shaft available for coupling to the air motor.

It will also be appreciated that before the connecting rods 207 are connected to the worm gear jacks 196, the worm gear jacks may be individually and precisely adjusted so that the shoes 182 will be concentric

-14-

with the axial centerline 216 of the loader basket when radially expanded against the worm gear jacks. Then, after the connecting rods have been connected between the worm gear jacks as aforedescribed, the concentricity of the loader shoes will be maintained over the entire range of bead size adjustment. Accordingly, the concentricity adjustments need only once be performed.

Although the invention has been shown and described with respect to a preferred embodiment, it is obvious that equivalent alterations and modifications will occur to others skilled in the art upon the reading and understanding of this specification. For example, modification may be made for top loading of a tire in a tire curing press as by inverting and repositioning the guide track so that a suitably configured loader basket moves from an over-center position to a center position as such loader basket is vertically raised in the press for controlled transfer of the tire to the top half of the press. The present invention includes all such equivalent alterations and modifications, and is limited only by the scope of the following claims.

0198640

-15-

<u>CLAIMS:</u>

1. A tire press and loader therefor, said press including a mold cavity (12) having a center axis (80), and said loader including a support (28) adjacent said mold cavity, tire engaging means (18) for engaging and holding a tire, means for mounting said tire engaging means on said support for vertical and horizontal movement, first actuator means (48) for vertically moving said tire engaging means, characterized by second actuator means (44) for horizontally moving said tire engaging means from a position outside of said press to a beyond center position in said press when open, and mechanical guide means (86, 88) for horizontally shifting said tire engaging means from such beyond center position to a position centered in relation to the center axis of said cavity as said tire engaging means is moved vertically in said press by said first actuator means.

2. A tire press as set forth in claim 2 wherein said guide means includes a guide track (86) and a track follower (88).

3. A tire press as set forth in claim 3, wherein said second actuator means (44) operates to maintain said guide track and track follower in engagement as said tire engaging means is moved vertically in the press.

4. A tire press as set forth in claim 3, wherein said guide track has a guide surface (90) including a lower portion (94) parallel to the center axis of the press and end portion (96) initially engaged by the track follower for urging of the tire engaging means from such beyond center position to such center position.

5. A tire press as set forth in claim 1, wherein said means for mounting said tire engaging means includes a loader frame having an arm (20) mounted on said support for swinging movement about a vertical axis, and said tire engaging means includes a loader basket mounted on the distal end of said arm.

6. A tire press as set forth in claim 4, wherein said guide track and track follower are horizontally offset from the vertical swing axis of said loader frame.

7. A tire press as set forth in claim 1 wherein said support comprises a spline shaft on which said loader frame is mounted, said second actuator means turning said spline shaft about its axis.

8. A tire press as set forth in claim 7 wherein said first actuator means moves said frame axially along said spline shaft.

9. A tire engaging basket for a tire curing press transfer device comprising a support, a plurality of tire engaging shoes (116, 182) mounted on said support in a circumferential arrangement for generally radial movement, means for moving said shoes radially, a plurality of stops (146, 198) mounted on said support and operative to engage each shoe to limit the radial position thereof, characterized by each stop being adjustable to vary the extent of movement of the respective shoe, and means (164, 212) for simultaneously adjusting said stops.

10. A basket as set forth in claim 9, wherein said means for adjusting includes means serially connecting said adjustable stops for single point and uniform adjustment.

11. A basket as set forth in claim 10 wherein each stop includes a worm gear jack.

12. A basket as set forth in claim 11 wherein said jacks are driven from a single hand knob (164) through flexible shafts.

13. A basket as set forth in claim 11 wherein said jacks are driven from a single crank (212) through rigid shafts (207) and universal joints (208).

FIG. 1

**Fig. 2**

**Fig. 3**

**Fig. 5**

Fig. 4

Fig.6

Fig.8

FIG. 7